# FASCICULE DE BREVET EUROPEEN

(11) **EP 3 050 272 B1**
(45) Date de publication et mention de la délivrance du brevet: **02.08.2017**
(21) Numéro de dépôt: 14771869.6
(22) Date de dépôt: 22.09.2014
(51) Int. Cl.: H04L 29/06, H04L 12/18, H04L 12/46

(54) **DISPOSITIF ET PROCÉDÉ DE GESTION D'ABONNEMENT À DES TRANSMISSIONS POINT-À-MULTIPOINT**
VORRICHTUNG UND VERFAHREN ZUR VERWALTUNG VON ABONNEMENTS FÜR PUNKT-ZU-MEHRPUNKT-ÜBERTRAGUNGEN
DEVICE AND METHOD FOR MANAGING SUBSCRIPTIONS TO POINT-TO-MULTIPOINT TRANSMISSIONS

(30) Priorité: 23.09.2013 FR 1359100
(43) Date de publication de la demande: 03.08.2016
(73) Titulaire: SAGEMCOM BROADBAND SAS, 92500 Rueil Malmaison (FR)
(72) Inventeur: ALARCON, Laurent, F-92500 Rueil Malmaison (FR); ROCQUELAY, Antonie, F-92500 Rueil Malmaison (FR)
(74) Mandataire: Le Guen-Maillet
(86) Numéro de dépôt international: PCT/EP2014/070078
(87) Numéro de publication internationale: WO 2015/040200

(56) Documents cités:
- WO-A1-2007/023146
- US-A1- 2007 140 213
- US-A1- 2011 200 042

## Description

La présente invention concerne une gestion de requêtes d'abonnement à des transmissions point-à-multipoint (« multicast transmissions » en anglais) dans un réseau de communication.

De nombreuses applications et équipements, comme par exemple le logiciel iTunes (marque déposée) ou les imprimantes partagées, utilisent des protocoles de transmissions point-à-multipoint. On peut citer par exemple les protocoles SSDP (« Simple Service Discovery Protocol » en anglais) et mDNS (« multicast Domain Name System » en anglais).

Des dispositifs d'interconnexion de réseaux de communication peuvent comporter des modules consommateurs de requêtes d'abonnement (et de requêtes de désabonnement correspondantes) à des transmissions point-à-multipoint. De tels modules consommateurs de requêtes permettent de limiter la diffusion de ces requêtes au sein des réseaux de communication. En faisant référence au protocole IGMP (« Internet Group Management Protocol » en anglais, tel que défini par la norme RFC 2236 (IGMPv2) et par les normes RFC 3376 et RFC 4604 (IGMPv3)), de tels modules consommateurs de requêtes prennent la forme de modules proxy IGMP. Le même principe s'applique aussi dans le cadre du protocole MLD (« Multicast Listener Discovery » en anglais, tel que défini dans la norme RFC 4604 (MLDv2)). De tels dispositifs d'interconnexion de réseaux de communication sont par exemple des passerelles résidentielles permettant d'interconnecter un réseau local LAN (« Local Area Network » en anglais) et un réseau étendu WAN (« Wide Area Network » en anglais) tel que l'Internet.

Les réseaux locaux LAN peuvent comporter des dispositifs pont (« bridge devices » en anglais) externes aux dispositifs d'interconnexions susmentionnés. Ces dispositifs pont externes ne sont pas passifs vis-à-vis des transmissions point-à-multipoint et peuvent notamment effectuer un filtrage qui, en combinaison avec un module consommateur dans le dispositif d'interconnexion, empêche les applications susmentionnées de fonctionner correctement. En effet, lorsque ledit dispositif d'interconnexion interconnecte deux branches du réseau local LAN, le module consommateur de requêtes d'abonnement consomme les requêtes d'abonnement (et de désabonnement) à des transmissions point-à-multipoint pour lesquelles un serveur est situé sur une desdites branches et un client est situé sur une autre desdites branches. La requête d'abonnement étant consommée par le module consommateur de requêtes d'abonnement, au moins un dispositif pont externe peut se retrouver, par défaut de configuration préalable, en situation de filtrer les messages point-à-multipoint transmis dans le cadre desdites transmissions point-à-multipoint.

Il est souhaitable de pallier ces inconvénients de l'état de la technique. Il est notamment souhaitable de fournir une solution qui permette d'assurer des transmissions point-à-multipoint entre un dispositif terminal situé sur une branche d'un réseau de communication et au moins un autre dispositif terminal situé sur une autre branche du réseau de communication lorsqu'au moins une desdites branches comporte un dispositif pont configurable pour filtrage des messages point-à-multipoint, les deux branches du réseau de communication étant reliées par un dispositif d'interconnexion disposant d'un module consommateur de requêtes d'abonnement aux transmissions point-à-multipoint empêchant la propagation desdites requêtes d'une dite branche à l'autre. Il est toutefois aussi souhaitable de limiter la diffusion de telles requêtes d'abonnement dans le réseau de communication.

Il est aussi souhaitable de fournir une solution qui soit simple à mettre en oeuvre.

L'invention concerne un procédé de gestion de requêtes d'abonnement à des transmissions point-à-multipoint dans un réseau de communication dont au moins deux branches sont interconnectées par un dispositif d'interconnexion comportant un module consommateur de telles requêtes d'abonnement empêchant la propagation desdites requêtes d'une branche à une autre branche du réseau de communication, au moins une desdites branches comportant au moins un dispositif pont. Le procédé est tel que, le dispositif d'interconnexion comportant un module d'annonce d'abonnement, ledit module d'annonce d'abonnement effectue l'étape suivante : sur réception via une branche d'une première requête d'abonnement à une transmission point-à-multipoint, transmission d'une seconde requête d'abonnement à ladite transmission point-à-multipoint au moins via la branche via laquelle ladite première requête d'abonnement a été reçue. Ainsi, en envoyant une seconde requête d'abonnement au moins via la branche par laquelle la première requête d'abonnement est parvenue au dispositif d'interconnexion, les dispositifs pont placés sur ladite branche peuvent se configurer correctement pour permettre à la transmission point-à-multipoint d'aboutir dans le réseau de communication.

Selon un mode de réalisation particulier, ledit module d'annonce d'abonnement effectue l'étape suivante : sur réception via une branche d'une première requête de désabonnement à une transmission point-à-multipoint, transmission d'une seconde requête de désabonnement à ladite transmission point-à-multipoint au moins via ladite branche via laquelle ladite première requête de désabonnement a été reçue. Ainsi, en envoyant une seconde requête de désabonnement au moins via la branche par laquelle la première requête de désabonnement est parvenue au dispositif d'interconnexion, les dispositifs pont placés sur ladite branche peuvent maintenir à jour leur configuration vis-à-vis de la transmission point-à-multipoint.

Selon un mode de réalisation particulier, ledit module d'annonce d'abonnement effectue les étapes suivantes : sur réception via une branche de ladite première requête d'abonnement, transmission de ladite seconde requête d'abonnement via chacune desdites branches ; et, sur réception d'un message point-à-multipoint dans le cadre de ladite transmission point-à-multipoint, création d'un client virtuel en association avec la branche via laquelle ledit message point-à-multipoint a été reçu. Ainsi, la transmission point-à-multipoint aboutit, même si un dispositif serveur de la transmission point-à-multipoint ne transmet pas de requête d'abonnement à ladite transmission point-à-multipoint.

Selon un mode de réalisation particulier, ledit module d'annonce d'abonnement transmet périodiquement ou pseudo-périodiquement la seconde requête d'abonnement uniquement via ladite branche via laquelle ladite première requête a été reçue et via ladite branche pour laquelle le client virtuel a été créé. Ainsi, la transmission point-à-multipoint continue d'aboutir, même lorsque les informations contenues dans les requêtes d'abonnement à la transmission point-à-multipoint ont une durée de vie limitée.

Selon un mode de réalisation particulier, ledit module d'annonce d'abonnement supprime ledit client virtuel lorsque le dispositif d'interconnexion considère que le dernier client de ladite transmission point-à-multipoint est déconnecté.

Selon un mode de réalisation particulier, lorsque chaque serveur de la transmission point-à-multipoint est supposé envoyer une requête d'abonnement à ladite transmission point-à-multipoint, ledit module d'annonce d'abonnement transmet ladite seconde requête d'abonnement uniquement via ladite branche via laquelle ladite première requête a été reçue.

Selon un mode de réalisation particulier, ledit module d'annonce d'abonnement transmet périodiquement ou pseudo-périodiquement la seconde requête d'abonnement uniquement via ladite branche via laquelle ladite première requête a été reçue. Ainsi, les diffusions de requêtes d'abonnement dans le réseau de communication sont réduites, même lorsque les informations contenues dans les requêtes d'abonnement à la transmission point-à-multipoint ont une durée de vie limitée.

Selon un mode de réalisation particulier, le dispositif d'interconnexion comportant un dispositif pont interne, chaque branche est identifiée par le port dudit dispositif pont interne via lequel ladite branche est connectée.

Selon un mode de réalisation particulier, le dispositif d'interconnexion est une passerelle résidentielle.

L'invention concerne également un dispositif d'interconnexion adapté pour gérer des requêtes d'abonnement à des transmissions point-à-multipoint dans un réseau de communication dont au moins deux branches sont interconnectées par le dispositif d'interconnexion, le dispositif d'interconnexion comportant un module consommateur de telles requêtes d'abonnement empêchant la propagation desdites requêtes d'une branche à une autre branche du réseau de communication, au moins une desdites branches étant destinée à comporter au moins un dispositif pont. Le dispositif d'interconnexion comporte un module d'annonce d'abonnement et met en oeuvre, sur réception via une branche d'une première requête d'abonnement à une transmission point-à-multipoint, des moyens de transmission d'une seconde requête d'abonnement à ladite transmission point-à-multipoint au moins via la branche via laquelle ladite première requête d'abonnement a été reçue.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter l'un quelconque des procédés mentionnés ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un système reposant sur un réseau de communication, dans lequel la présente invention peut être mise en oeuvre ;
- la Fig. 2 illustre schématiquement un exemple d'architecture matérielle d'un dispositif d'interconnexion du système de la Fig. 1 ;
- la Fig. 3 illustre schématiquement des échanges de messages dans le cadre d'un abonnement à des transmissions point-à-multipoint via le réseau de communication, tel que connu dans l'état de la technique ;
- la Fig. 4 illustre schématiquement des échanges de messages dans le cadre de l'abonnement aux transmissions point-à-multipoint via le réseau de communication, selon un premier mode de réalisation de l'invention;
- la Fig. 5 illustre schématiquement des échanges de messages dans le cadre d'un désabonnement aux transmissions point-à-multipoint via le réseau de communication, selon le premier mode de réalisation de l'invention ;
- la Fig. 6 illustre schématiquement des échanges de messages dans le cadre de l'abonnement aux transmissions de données via le réseau de communication, selon un second mode de réalisation de l'invention ; et
- la Fig. 7 illustre schématiquement des échanges de messages dans le cadre du désabonnement aux transmissions de données via le réseau de communication, selon le second mode de réalisation de l'invention.

Dans la présente description, le terme « point-à-multipoint » s'entend au sens large, c'est-à-dire que le terme qualifie des transmissions pour lesquelles au moins un dispositif serveur s'adresse potentiellement à une pluralité de clients grâce à une même adresse IP. Ainsi, le terme « point-à-multipoint » couvre aussi les transmissions « multipoint-multipoint », dans lesquelles une pluralité de serveurs s'adresse potentiellement à une pluralité de clients grâce à une même adresse IP.

Par la suite, une requête d'abonnement à des transmissions de données point-à-multipoint (« multicast transmissions » en anglais) est appelée requête JOIN, dénomination empruntée aux terminologies IGMP et MLD, et que l'on retrouve dans de nombreux travaux traitant des transmissions point-à-multipoint. Selon le même principe, une requête de désabonnement des transmissions de données point-à-multipoint est appelée requête LEAVE.

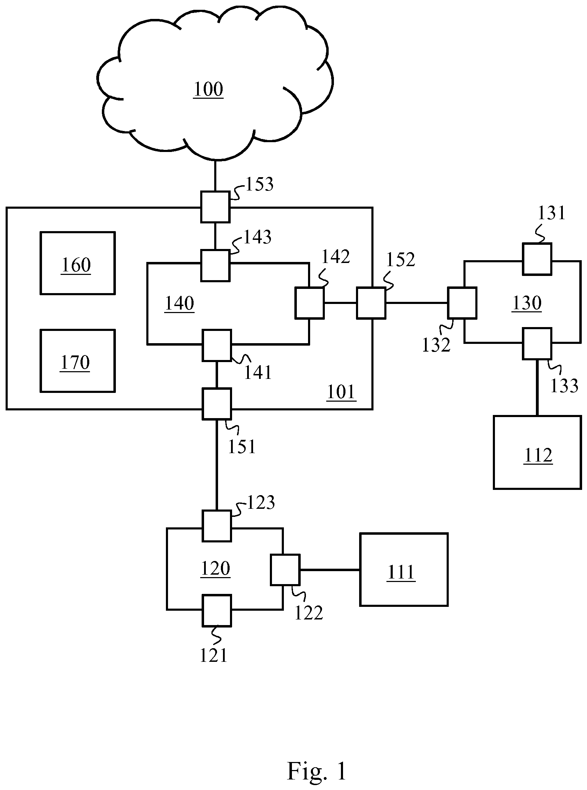

La Fig. 1 illustre schématiquement un système reposant sur un réseau de communication, dans lequel la présente invention peut être mise en oeuvre.

Le système schématiquement représenté à la Fig. 1 comporte un dispositif d'interconnexion 101. Le dispositif d'interconnexion 101 comporte une première interface 151 adaptée pour connecter une première branche du réseau de communication et une seconde interface 152 adaptée pour connecter une seconde branche du réseau de communication. Par exemple, la première interface 151 est une interface de type Ethernet, tel que défini dans la famille de standards IEEE 802.3, et la seconde interface 152 est une interface de type WiFi, tel que défini dans la famille de standards IEEE 802.11. Le dispositif d'interconnexion 101 peut comporter une troisième interface 153 permettant de connecter le dispositif d'interconnexion 101 à un réseau étendu WAN (« Wide Area Network » en anglais) 100, tel que l'Internet.

Dans un mode de réalisation préféré, le réseau de communication est un réseau de type LAN (« Local Area Network » en anglais) et le dispositif d'interconnexion 101 est une passerelle résidentielle. A titre illustratif, c'est ce cas de figure qui sera considéré par la suite.

Le système schématiquement représenté à la Fig. 1 comporte en outre un premier dispositif pont (« bridge device » en anglais) 120 et un second dispositif pont 130. Le premier dispositif pont 120 comporte une pluralité de ports 121, 122, 123. Le second dispositif pont 130 comporte, lui aussi, une pluralité de ports 131, 132, 133.

Chacun des premier 120 et second 130 dispositifs pont sont adaptés pour, lorsque ledit dispositif pont reçoit une requête JOIN, déterminer via quel port du dispositif pont ladite requête JOIN a été reçue et pour propager la requête JOIN via les autres ports dudit dispositif pont. Ledit dispositif pont conserve en mémoire une information représentative dudit port via lequel ladite requête JOIN a été reçue, en association avec l'adresse IP point-à-multipoint (« multicast IP address » en anglais) concernée par ladite requête JOIN, jusqu'à ce qu'une requête LEAVE correspondante soit reçue ou qu'une temporisation de durée prédéfinie soit écoulée sans qu'une nouvelle requête JOIN ne soit reçue. En effet, de manière préférentielle, un dispositif souhaitant continuer à participer à des transmissions point-à-multipoint envoie périodiquement des requêtes JOIN pour maintenir actif l'abonnement auxdites transmissions point-à-multipoint. Cela entraîne que les informations relatives à une requête JOIN ont une certaine durée de vie et que la temporisation vise à détecter un arrêt de l'envoi périodique de ces requêtes JOIN.

Ainsi, lorsque le premier dispositif pont 120 ou le second dispositif pont 130 reçoit un message point-à-multipoint à une certaine adresse IP point-à-multipoint, ledit dispositif pont recherche en mémoire la présence de ladite adresse IP point-à-multipoint parmi les informations stockées sur réception de message JOIN. Ledit dispositif pont récupère alors une information représentative du ou des ports dudit dispositif pont avec lequel ou lesquels ladite adresse IP point-à-multipoint est associée. Ledit dispositif pont propage alors ledit message point-à-multipoint via ledit ou lesdits ports, à l'exception du port via lequel ledit message point-à-multipoint a été reçu si ce port fait partie de l'ensemble des ports stockés en mémoire en association avec ladite adresse IP point-à-multipoint.

Sur la Fig. 1, le premier dispositif pont 120 est connecté, via son port 123, à la première interface 151 du dispositif d'interconnexion 101 et le second dispositif pont 130 est connecté, via son port 132, à la seconde interface 152 du dispositif d'interconnexion 101.

Le dispositif d'interconnexion 101 comporte en outre un module 160 consommateur de requêtes d'abonnement et de désabonnement à des transmissions point-à-multipoint. Le module consommateur 160 est adapté pour espionner et consommer les messages JOIN et LEAVE parvenant au troisième dispositif pont 140, notamment les messages JOIN et LEAVE reçus via les première 151 et seconde 152 interfaces du dispositif d'interconnexion 101. Le module consommateur 160 prend par exemple la forme d'un proxy IGMP visant à limiter les propagations de messages IGMP dans le réseau de communication. Le module consommateur 160 est alors notamment en charge d'identifier les messages IGMP nécessitant des abonnements ou désabonnements auprès de transmissions point-à-multipoint issues du réseau étendu WAN 100.

Le dispositif d'interconnexion 101 comporte préférentiellement un troisième dispositif pont 140, dit dispositif pont *interne* comparativement aux premier 120 et second 130 dispositifs pont qualifiés d'*externes* vis-à-vis du dispositif d'interconnexion 101. Le troisième dispositif pont 140 comporte une pluralité de ports 141, 142, 143. Le port 141 du troisième dispositif pont 140 est connecté à la première interface 151 et le port 142 du troisième dispositif pont 140 est connecté à la seconde interface 152. En outre, le port 143 du troisième dispositif pont 140 peut être connecté à la troisième interface 153. Le troisième dispositif pont 140 est adapté pour, lorsque ledit troisième dispositif pont 140 reçoit une requête JOIN, déterminer via quel port du troisième dispositif pont 140 ladite requête JOIN a été reçue. Le troisième dispositif pont conserve en mémoire une information représentative dudit port via lequel ladite requête JOIN a été reçue, en association avec l'adresse IP point-à-multipoint concernée par ladite requête JOIN, jusqu'à ce qu'une requête LEAVE correspondante soit reçue ou qu'une temporisation de durée prédéfinie soit écoulée sans qu'une nouvelle requête JOIN ne soit reçue. La requête JOIN est alors consommée par le module consommateur 160, tel que déjà évoqué ci-dessus.

Ainsi, lorsque le troisième dispositif pont 140 reçoit un message point-à-multipoint à une certaine adresse IP point-à-multipoint, ledit dispositif pont recherche en mémoire la présence de ladite adresse IP point-à-multipoint parmi les informations stockées sur réception de message JOIN. Ledit dispositif pont récupère alors une information représentative du ou des ports du troisième dispositif pont 140 avec lequel ou lesquels ladite adresse IP point-à-multipoint est associée. Le troisième dispositif pont 140 propage alors ledit message point-à-multipoint via ledit ou lesdits ports, à l'exception du port via lequel ledit message point-à-multipoint a été reçu si ce port fait partie de l'ensemble des ports stockés en mémoire en association avec ladite adresse IP point-à-multipoint.

Ainsi, lorsque le dispositif d'interconnexion comporte le troisième dispositif pont 140, chaque branche du réseau de communication est identifiée par le port du troisième dispositif pont 140 via lequel ladite branche est connectée.

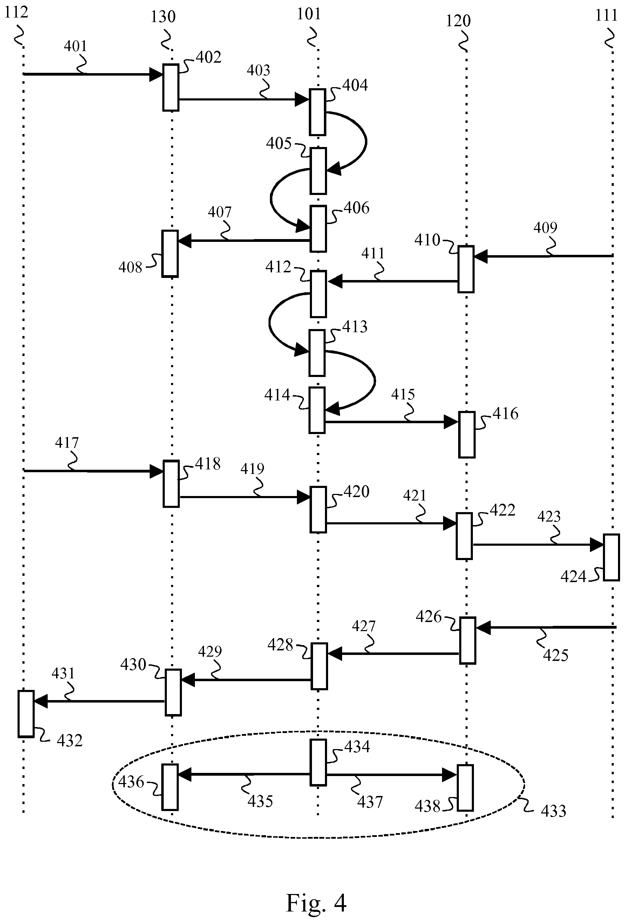

Selon la présente invention, le dispositif d'interconnexion 101 comporte en outre un module 170 d'annonce d'abonnement permettant de gérer les abonnements et les désabonnements à des transmissions point-à-multipoint issues du réseau de communication, par exemple des transmissions point-à-multipoint impliquant les premier 111 et second 112 dispositifs terminaux. Le comportement du module 170 d'annonce d'abonnement est décrit ci-après en relation avec les Figs. 4 à 7.

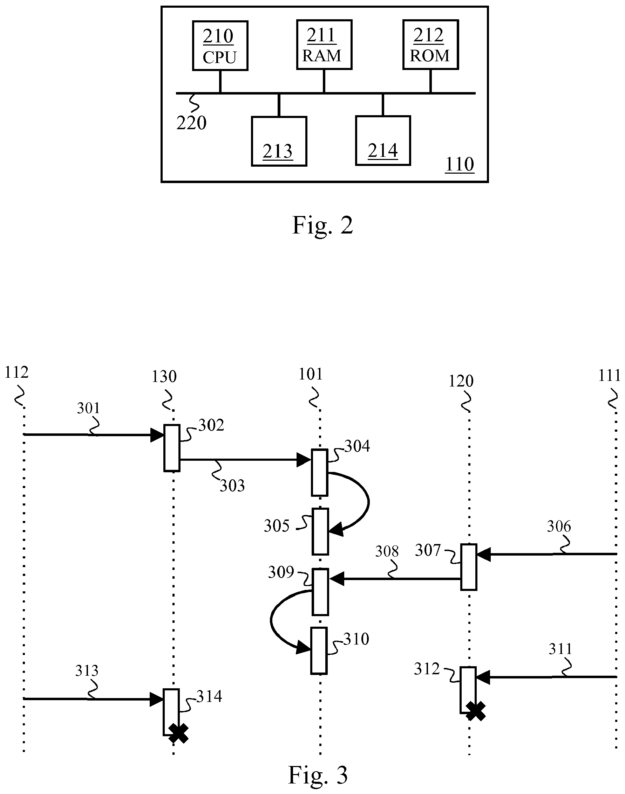

Sur la Fig. 1, un premier dispositif terminal 111 est connecté sur le port 122 du premier dispositif pont 120 et un second dispositif terminal 112 est connecté sur le port 133 du second dispositif pont 130. Des échanges de messages, dans le cadre de transmissions point-à-multipoint entre les premier 111 et second 112 dispositifs terminaux, sont détaillés ci-après en relation avec les Figs. 3 à 7.

La Fig. 2 illustre schématiquement un exemple d'architecture matérielle de tout ou partie du dispositif d'interconnexion 101.

Le dispositif d'interconnexion 101 comporte alors, reliés par un bus de communication 220 : un processeur ou CPU (« Central Processing Unit » en anglais) 210 ; une mémoire vive RAM (« Random Access Memory » en anglais) 211 ; une mémoire morte ROM (« Read Only Memory » en anglais) 212 ; une unité de stockage ou un lecteur de support de stockage, tel qu'un lecteur de cartes SD (« Secure Digital » en anglais) ou un disque dur HDD (« Hard Disk Drive » en anglais) 213 ; et un ensemble d'interfaces 214 permettant au dispositif d'interconnexion 101 de communiquer via le réseau de communication.

Le processeur 210 est capable d'exécuter des instructions chargées dans la RAM 211 à partir de la ROM 212, d'une mémoire externe (non représentée), d'un support de stockage, ou d'un réseau de communication. Lorsque le dispositif d'interconnexion 101 est mis sous tension, le processeur 210 est capable de lire de la RAM 211 des instructions et de les exécuter. Ces instructions forment un programme d'ordinateur causant la mise en oeuvre, par le dispositif d'interconnexion 101, de tout ou partie des algorithmes et étapes relatifs aux échanges de messages décrits ci-après en relation avec les Figs. 4 à 7.

Ainsi, tout ou partie des algorithmes et étapes relatifs aux échanges de messages décrits ci-après en relation avec les Figs. 4 à 7 peut être implémenté sous forme logicielle par exécution d'un ensemble d'instructions par une machine programmable, tel qu'un DSP (« Digital Signal Processor » en anglais) ou un microcontrôleur. Tout ou partie des algorithmes et étapes relatifs aux échanges de messages décrits ci-après en relation avec les Figs. 4 à 7 peut aussi être implémenté sous forme matérielle par une machine ou un composant dédié, tel qu'un FPGA (« Field-Programmable Gate Array » en anglais) ou un ASIC (« Application-Specific Integrated Circuit » en anglais).

La Fig. 3 illustre schématiquement des échanges de messages dans le cadre d'un abonnement à des transmissions point-à-multipoint via le réseau de communication, tel que connu dans l'état de la technique. Il est alors considéré que le dispositif d'interconnexion 101 ne met pas en oeuvre le module 170 d'annonce d'abonnement.

Dans une étape 301, le second dispositif terminal 112 transmet un message JOIN afin d'abonner le second dispositif terminal 112 à une transmission point-à-multipoint identifiée par une adresse IP (notée IP1) spécifique à cette transmission point-à-multipoint.

Dans une étape 302, le second dispositif pont 130 reçoit le message JOIN transmis à l'étape 301, identifie via quel port dudit second dispositif pont 130 ledit message JOIN a été reçu et stocke en mémoire une information représentative dudit port et de ladite adresse IP1. Le second dispositif pont 130 propage alors, dans une étape 303, ledit message JOIN sur tous les autres ports dudit second dispositif pont 130, *i.e.* tous les ports dudit second dispositif pont 130 à l'exception du port via lequel ledit message JOIN a été reçu.

Dans une étape 304, le dispositif d'interconnexion 101 reçoit ledit message JOIN propagé par le second dispositif pont 130 à l'étape 303 et identifie via quel port dudit troisième dispositif pont 140 ledit message JOIN a été reçu. Le message JOIN reçu est alors traité par le module consommateur 160. Le module consommateur 160 détermine si le message JOIN reçu implique un abonnement auprès d'une transmission point-à-multipoint issue du réseau étendu WAN 100. Dans le cadre de transmissions point-à-multipoint localisées sur le réseau de communication formé par les branches connectées aux première 151 et seconde 152 interfaces du dispositif d'interconnexion 101, aucun abonnement auprès d'une transmission point-à-multipoint issue du réseau étendu WAN 100 n'est requis. Le module consommateur 160 efface alors le message JOIN reçu, dans une étape 305. Le message JOIN n'est alors pas propagé dans le reste du réseau de communication et le premier dispositif pont 120 n'est pas informé de ce message JOIN.

Symétriquement, dans une étape 306, le premier dispositif terminal 111 transmet un message JOIN afin d'abonner le premier dispositif terminal 111 à la même transmission point-à-multipoint.

Dans une étape 307, le premier dispositif pont 120 reçoit le message JOIN transmis à l'étape 306, identifie via quel port dudit premier dispositif pont 120 ledit message JOIN a été reçu et stocke en mémoire une information représentative dudit port et de ladite adresse IP1. Le premier dispositif pont 120 propage alors, dans une étape 308, ledit message JOIN sur tous les autres ports dudit premier dispositif pont 120, *i.e.* tous les ports dudit premier dispositif pont 120 à l'exception du port via lequel ledit message JOIN a été reçu.

Dans une étape 309, le dispositif d'interconnexion 101 reçoit ledit message JOIN propagé par le premier dispositif pont 120 à l'étape 308 et identifie via quel port dudit troisième dispositif pont 140 ledit message JOIN a été reçu. Le message JOIN reçu est alors traité par le module consommateur 160. Le module consommateur 160 détermine si le message JOIN reçu implique un abonnement auprès d'une transmission point-à-multipoint issue du réseau étendu WAN 100. Comme ce n'est pas le cas, le module consommateur 160 efface alors le message JOIN reçu, dans une étape 310. Le message JOIN n'est alors pas propagé dans le reste du réseau de communication et le second dispositif pont 130 n'est pas informé de ce message JOIN.

Lorsque le premier dispositif terminal 111 transmet dans une étape 311 un message point-à-multipoint à l'adresse IP1, ce message est reçu par le premier dispositif pont 120 dans une étape 312. Le premier dispositif pont 120 retrouve l'adresse IP1 uniquement associée au port 122, qui est le port via lequel ledit message point-à-multipoint à l'adresse IP1 a été reçu. Le premier dispositif pont 120 ne propage alors pas ledit message et le jette. De plus, lorsque le second dispositif terminal 112 transmet dans une étape 313 un message point-à-multipoint à l'adresse IP1, ce message est reçu par le second dispositif pont 130 dans une étape 314. Le second dispositif pont 130 retrouve l'adresse IP1 uniquement associée au port 133, qui est le port via lequel ledit message point-à-multipoint à l'adresse IP1 a été reçu. Le second dispositif pont 130 ne propage alors pas ledit message et le jette. Les transmissions point-à-multipoint dans le réseau de communication ne peuvent alors pas aboutir. La mise en oeuvre du module 170 d'annonce d'abonnement vise à pallier ce problème, tel que détaillé ci-après en relation avec les Figs. 4 à 7.

La Fig. 3 représente schématiquement une tentative d'établissement d'une transmission point-à-multipoint bidirectionnelle entre les premier 111 et second 112 dispositifs terminaux. Le même résultat serait atteint dans le cadre d'une transmission point-à-multipoint unidirectionnelle depuis le premier 111 dispositif terminal vers le second dispositif terminal 112.

La Fig. 4 illustre schématiquement des échanges de messages dans le cadre d'un abonnement à des transmissions point-à-multipoint via le réseau de communication, selon un premier mode de réalisation de l'invention.

Dans une étape 401, le second dispositif terminal 112 transmet un message JOIN afin d'abonner le second dispositif terminal 112 à une transmission point-à-multipoint identifiée par l'adresse IP1.

Dans une étape 402, le second dispositif pont 130 reçoit le message JOIN transmis à l'étape 401, identifie via quel port dudit second dispositif pont 130 ledit message JOIN a été reçu et stocke en mémoire une information représentative dudit port et de ladite adresse IP1. Le second dispositif pont 130 propage alors, dans une étape 403, ledit message JOIN sur tous les autres ports dudit second dispositif pont 130, *i.e.* tous les ports dudit second dispositif pont 130 à l'exception du port via lequel ledit message JOIN a été reçu.

Dans une étape 404, le dispositif d'interconnexion 101 reçoit ledit message JOIN propagé par le second dispositif pont 130 à l'étape 403 et identifie via quel port dudit troisième dispositif pont 140 ledit message JOIN a été reçu. Le message JOIN reçu est alors traité par le module consommateur 160 et par le module 170 d'annonce d'abonnement. Le module consommateur 160 détermine si le message JOIN reçu implique un abonnement auprès d'une transmission point-à-multipoint issue du réseau étendu WAN 100. Dans le cadre de transmissions point-à-multipoint localisées sur le réseau de communication formé par les branches connectées aux première 151 et seconde 152 interfaces du dispositif d'interconnexion 101, aucun abonnement auprès d'une transmission point-à-multipoint issue du réseau étendu WAN 100 n'est requis. Le module consommateur 160 efface alors le message JOIN reçu, dans une étape 405. Dans une étape 406, le module 170 d'annonce d'abonnement identifie via quel port dudit troisième dispositif pont 140 ledit message JOIN a été reçu et stocke une information représentative dudit port en association avec l'adresse IP1.

Dans une étape 407, le module 170 d'annonce d'abonnement transmet un message JOIN concernant la transmission point-à-multipoint identifiée par l'adresse IP1 via le port via lequel le précédent message JOIN transmis par le second dispositif terminal 112 a été reçu, c'est-à-dire le port 142. Ce message JOIN, transmis par le module 170 d'annonce d'abonnement, est alors reçu par le second dispositif pont 130 via le port 132 dans une étape 408. Le second dispositif pont 130 identifie alors via quel port dudit second dispositif pont 130 ledit message JOIN a été reçu et stocke en mémoire une information représentative dudit port et de ladite adresse IP1. Le second dispositif pont 130 propage alors le message JOIN, reçu à l'étape 408, via les autres ports du second dispositif pont 130 (étape non représentée sur la Fig. 4).

Symétriquement, dans une étape 409, le premier dispositif terminal 111 transmet un message JOIN afin d'abonner le premier dispositif terminal 111 à la même transmission point-à-multipoint.

Dans une étape 410, le premier dispositif pont 120 reçoit le message JOIN transmis à l'étape 409, identifie via quel port dudit premier dispositif pont 120 ledit message JOIN a été reçu et stocke en mémoire une information représentative dudit port et de ladite adresse IP1. Le premier dispositif pont 120 propage alors, dans une étape 411, ledit message JOIN sur tous les autres ports dudit premier dispositif pont 120, *i.e.* tous les ports dudit premier dispositif pont 120 à l'exception du port via lequel ledit message JOIN a été reçu.

Dans une étape 412, le dispositif d'interconnexion 101 reçoit ledit message JOIN propagé par le premier dispositif pont 120 à l'étape 411 et identifie via quel port dudit troisième dispositif pont 140 ledit message JOIN a été reçu. Le message JOIN reçu est alors traité par le module consommateur 160 et par le module 170 d'annonce d'abonnement. Le module consommateur 160 détermine si le message JOIN reçu implique un abonnement auprès d'une transmission point-à-multipoint issue du réseau étendu WAN 100. Comme ce n'est pas le cas, le module consommateur 160 efface alors le message JOIN reçu, dans une étape 413. Dans une étape 414, le module 170 d'annonce d'abonnement identifie via quel port dudit troisième dispositif pont 140 ledit message JOIN a été reçu et stocke une information représentative dudit port en association avec l'adresse IP1.

Dans une étape 415, le module 170 d'annonce d'abonnement transmet un message JOIN concernant la transmission point-à-multipoint identifiée par l'adresse IP1 via le port via lequel le précédent message JOIN transmis par le premier dispositif terminal 111 a été reçu, c'est-à-dire le port 141. Ce message JOIN, transmis par le module 170 d'annonce d'abonnement, est alors reçu par le premier dispositif pont 120 via le port 123 dans une étape 416. Le premier dispositif pont 120 identifie alors via quel port dudit premier dispositif pont 120 ledit message JOIN a été reçu et stocke en mémoire une information représentative dudit port et de ladite adresse IP1. Le premier dispositif pont 120 propage alors le message JOIN, reçu à l'étape 416, via les autres ports du premier dispositif pont 120 (étape non représentée sur la Fig. 4).

Lorsque le second dispositif terminal 112 transmet dans une étape 417 un message point-à-multipoint à l'adresse IP1, ce message est reçu par le second dispositif pont 130 dans une étape 418. Le second dispositif pont 130 retrouve l'adresse IP1 associée au port 132 et au port 133. Le message point-à-multipoint étant reçu via le port 133, le second dispositif pont 130 propage ledit message point-à-multipoint via le port 132 dans une étape 419. Le message point-à-multipoint est alors reçu par le dispositif d'interconnexion 101 dans une étape 420. Le dispositif d'interconnexion 101 retrouve l'adresse IP1 associée au port 141 et au port 142. Le message point-à-multipoint étant reçu via le port 142, le troisième dispositif pont 140 propage ledit message point-à-multipoint via le port 141 dans une étape 421. Le message point-à-multipoint est alors reçu par le premier dispositif pont 120 dans une étape 422. Le premier dispositif pont 120 retrouve l'adresse IP1 associée au port 122 et au port 123. Le message point-à-multipoint étant reçu via le port 123, le premier dispositif pont 120 propage ledit message point-à-multipoint via le port 122 dans une étape 423. Le message point-à-multipoint est alors reçu et consommé par le premier dispositif terminal 111 dans une étape 424.

Lorsque le premier dispositif terminal 111 transmet dans une étape 425 un message point-à-multipoint à l'adresse IP1, ce message est reçu par le premier dispositif pont 120 dans une étape 426. Le premier dispositif pont 120 retrouve l'adresse IP1 associée au port 122 et au port 123. Le message point-à-multipoint étant reçu via le port 122, le premier dispositif pont 120 propage ledit message point-à-multipoint via le port 123 dans une étape 427. Le message point-à-multipoint est alors reçu par le dispositif d'interconnexion 101 dans une étape 428. Le dispositif d'interconnexion 101 retrouve l'adresse IP1 associée au port 141 et au port 142. Le message point-à-multipoint étant reçu via le port 141, le troisième dispositif pont 140 propage ledit message point-à-multipoint via le port 142 dans une étape 429. Le message point-à-multipoint est alors reçu par le second dispositif pont 130 dans une étape 430. Le second dispositif pont 130 retrouve l'adresse IP1 associée au port 132 et au port 133. Le message point-à-multipoint étant reçu via le port 132, le second dispositif pont 130 propage ledit message point-à-multipoint via le port 133 dans une étape 431. Le message point-à-multipoint est alors reçu et consommé par le second dispositif terminal 112 dans une étape 432.

La mise en oeuvre du module 170 d'annonce d'abonnement dont le comportement a été décrit ci-dessus permet ainsi aux transmissions point-à-multipoint, dans le réseau de communication, d'aboutir.

Dans un mode de réalisation particulier, lorsque les abonnements à des transmissions point-à-multipoint doivent être maintenus par des envois périodiques ou pseudopériodiques de messages JOIN, le module 170 d'annonce d'abonnement effectue de tels envois périodiques ou pseudopériodiques de messages JOIN comme suit. Sur la Fig. 4, cette phase d'envoi périodique est symbolisée par le groupe d'étapes 433. Dans une étape 434, le module 170 d'annonce d'abonnement détecte qu'une temporisation de durée prédéfinie est écoulée depuis l'envoi du ou des précédents messages JOIN par ledit module 170 d'annonce d'abonnement. Le module 170 d'annonce d'abonnement récupère l'information représentative de chaque port du troisième dispositif pont 140 via lequel un message JOIN a été précédemment reçu et stocké (lors des étapes 406 et 414 par exemple). Dans le contexte de la Fig. 4, le module 170 d'annonce d'abonnement récupère un identifiant du port 141, tel que stocké lors de l'étape 414, et un identifiant du port 142, tel que stocké lors de l'étape 406. Ensuite, le module 170 d'annonce d'abonnement génère et transmet un message JOIN, correspondant à l'adresse IP1, via chaque port ainsi identifié. Ainsi, dans une étape 435, le module 170 d'annonce d'abonnement transmet ce message JOIN via le port 142. Ce message JOIN est reçu par le second dispositif pont 130 dans une étape 436. Le second dispositif pont 130 augmente la durée de vie de la transmission point-multipoint associée à l'adresse IP1 pour ce qui concerne le port via lequel le message JOIN est reçu, *i.e.* le port 132, et propage le message JOIN via les autres ports, *i.e.* tous les ports dudit second dispositif pont 130 à l'exception du port via lequel ledit message JOIN a été reçu (étape non représentée sur la Fig. 4). De plus, dans une étape 437, le module 170 d'annonce d'abonnement transmet le message JOIN via le port 141. Ce message JOIN est reçu par le premier dispositif pont 120 dans une étape 438. Le premier dispositif pont 120 augmente la durée de vie de la transmission point-multipoint associée à l'adresse IP1 pour ce qui concerne le port via lequel le message JOIN est reçu, *i.e.* le port 123, et propage le message JOIN via les autres ports, *i.e.* tous les ports dudit premier dispositif pont 120 à l'exception du port via lequel ledit message JOIN a été reçu (étape non représentée sur la Fig. 4). Ensuite, le module 170 d'annonce d'abonnement réinitialise la temporisation, pour une réactivation ultérieure de la phase d'envoi périodique 433.

La Fig. 4 représente schématiquement un établissement de transmission point-à-multipoint bidirectionnelle entre les premier 111 et second 112 dispositifs terminaux. Le même résultat serait atteint dans le cadre d'une transmission point-à-multipoint unidirectionnelle depuis le premier 111 dispositif terminal vers le second dispositif terminal 112, dans la mesure où le dispositif terminal 111 envoie un message JOIN pour s'abonner à la transmission point-à-multipoint bien que le dispositif terminal 111 ait le rôle de serveur dans ladite transmission point-à-multipoint.

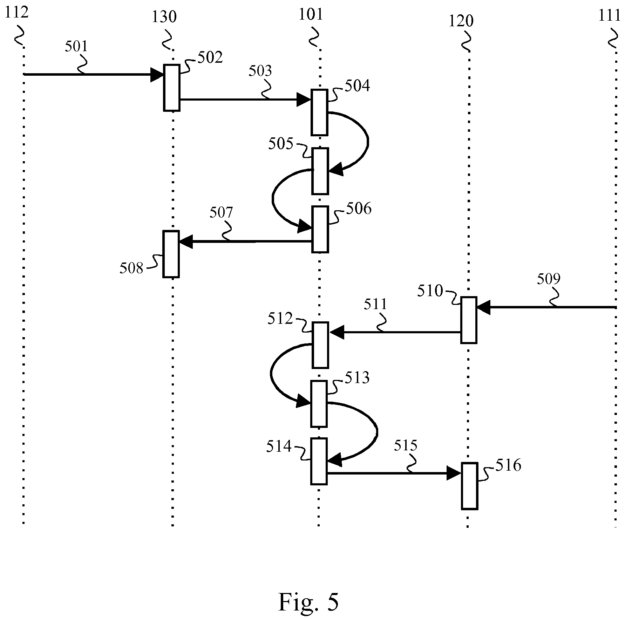

La Fig. 5 illustre schématiquement des échanges de messages dans le cadre d'un désabonnement à des transmissions point-à-multipoint via le réseau de communication, selon le premier mode de réalisation de l'invention.

Dans une étape 501, le second dispositif terminal 112 transmet un message LEAVE afin de désabonner le second dispositif terminal 112 de la transmission point-à-multipoint identifiée par l'adresse IP1.

Dans une étape 502, le second dispositif pont 130 reçoit le message LEAVE transmis à l'étape 501, identifie via quel port dudit second dispositif pont 130 ledit message LEAVE a été reçu et recherche en mémoire la présence d'une information représentative dudit port et de ladite adresse IP1. Lorsque le second dispositif pont 130 retrouve cette information, ledit second dispositif pont 130 efface cette information de sa mémoire et propage, dans une étape 503, ledit message LEAVE sur tous les autres ports dudit second dispositif pont 130, *i.e.* tous les ports dudit second dispositif pont 130 à l'exception du port via lequel ledit message LEAVE a été reçu.

Dans une étape 504, le dispositif d'interconnexion 101 reçoit ledit message LEAVE propagé par le second dispositif pont 130 à l'étape 503 et identifie via quel port dudit troisième dispositif pont 140 ledit message LEAVE a été reçu. Le message LEAVE reçu est alors traité par le module consommateur 160 et par le module 170 d'annonce d'abonnement. Le module consommateur 160 détermine si le message LEAVE reçu implique un désabonnement auprès d'une transmission point-à-multipoint issue du réseau étendu WAN 100. Dans le cadre de transmissions point-à-multipoint localisées sur le réseau de communication formé par les branches connectées aux première 151 et seconde 152 interfaces du dispositif d'interconnexion 101, aucun désabonnement auprès d'une transmission point-à-multipoint issue du réseau étendu WAN 100 n'est requis. Le module consommateur 160 efface alors le message LEAVE reçu, dans une étape 505. Dans une étape 506, le module 170 d'annonce d'abonnement identifie via quel port dudit troisième dispositif pont 140 ledit message LEAVE a été reçu et recherche en mémoire la présence d'une information représentative dudit port en association avec l'adresse IP1. Lorsque le module 170 d'annonce d'abonnement retrouve cette information, ledit module 170 d'annonce d'abonnement efface cette information de sa mémoire. Ensuite, dans une étape 507, le module 170 d'annonce d'abonnement transmet un message LEAVE concernant la transmission point-à-multipoint identifiée par l'adresse IP1 via le port via lequel le précédent message LEAVE transmis par le second dispositif terminal 112 a été reçu, c'est-à-dire le port 142. Ce message LEAVE, transmis par le module 170 d'annonce d'abonnement, est alors reçu par le second dispositif pont 130 via le port 132 dans une étape 508. Le second dispositif pont 130 identifie alors via quel port dudit second dispositif pont 130 ledit message LEAVE a été reçu et recherche en mémoire la présence d'une information représentative dudit port et de ladite adresse IP1. Lorsque le second dispositif pont 130 retrouve cette information, ledit second dispositif pont 130 efface cette information de sa mémoire et propage le message LEAVE, reçu à l'étape 508, via les autres ports du second dispositif pont 130 (étape non représentée sur la Fig. 5).

Symétriquement, dans une étape 509, le premier dispositif terminal 111 transmet un message LEAVE afin de désabonner le premier dispositif terminal 111 de la même transmission point-à-multipoint.

Dans une étape 510, le premier dispositif pont 120 reçoit le message LEAVE transmis à l'étape 509, identifie via quel port dudit premier dispositif pont 120 ledit message LEAVE a été reçu et recherche en mémoire la présence d'une information représentative dudit port et de ladite adresse IP1. Lorsque le premier dispositif pont 120 retrouve cette information, ledit premier dispositif pont 120 efface cette information de sa mémoire. Le premier dispositif pont 120 propage alors, dans une étape 511, ledit message LEAVE sur tous les autres ports dudit premier dispositif pont 120, *i.e.* tous les ports dudit premier dispositif pont 120 à l'exception du port via lequel ledit message LEAVE a été reçu.

Dans une étape 512, le dispositif d'interconnexion 101 reçoit ledit message LEAVE propagé par le premier dispositif pont 120 à l'étape 511 et identifie via quel port dudit troisième dispositif pont 140 ledit message LEAVE a été reçu. Le message LEAVE reçu est alors traité par le module consommateur 160 et par le module 170 d'annonce d'abonnement. Le module consommateur 160 détermine si le message LEAVE reçu implique un désabonnement auprès d'une transmission point-à-multipoint issue du réseau étendu WAN 100. Comme ce n'est pas le cas, le module consommateur 160 efface alors le message LEAVE reçu, dans une étape 513. Dans une étape 514, le module 170 d'annonce d'abonnement identifie via quel port dudit troisième dispositif pont 140 ledit message LEAVE a été reçu et recherche en mémoire la présence d'une information représentative dudit port en association avec l'adresse IP1. Lorsque le module 170 d'annonce d'abonnement retrouve cette information, ledit module 170 d'annonce d'abonnement efface cette information de sa mémoire. Ensuite, dans une étape 515, le module 170 d'annonce d'abonnement transmet un message LEAVE concernant la transmission point-à-multipoint identifiée par l'adresse IP1 via le port via lequel le précédent message LEAVE transmis par le premier dispositif terminal 111 a été reçu, c'est-à-dire le port 141. Ce message LEAVE, transmis par le module 170 d'annonce d'abonnement, est alors reçu par le premier dispositif pont 120 via le port 123 dans une étape 516. Le premier dispositif pont 120 identifie alors via quel port dudit premier dispositif pont 120 ledit message LEAVE a été reçu et recherche en mémoire une information représentative dudit port et de ladite adresse IP1. Lorsque le premier dispositif pont 120 retrouve cette information, ledit premier dispositif pont 120 efface cette information de sa mémoire et propage le message LEAVE, reçu à l'étape 516, via les autres ports du premier dispositif pont 120 (étape non représentée sur la Fig. 5).

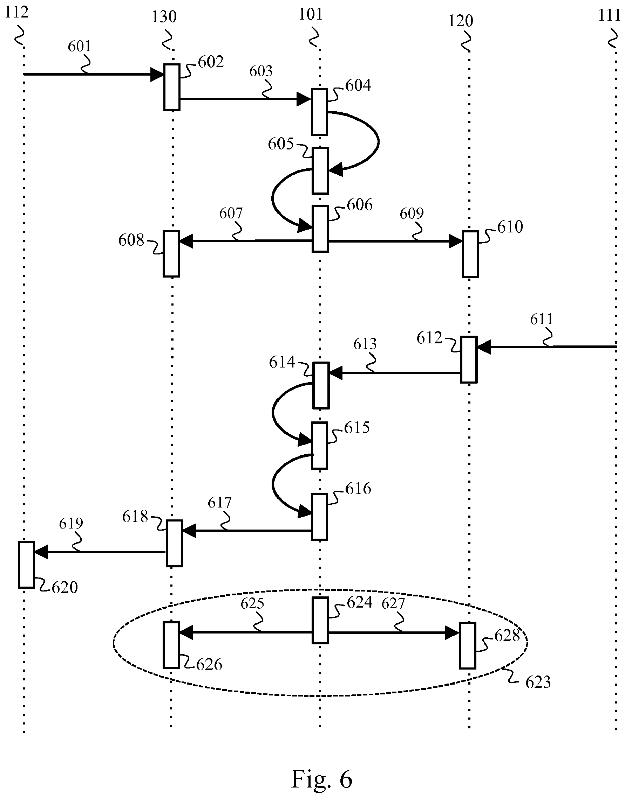

La Fig. 6 illustre schématiquement des échanges de messages dans le cadre d'un abonnement à des transmissions point-à-multipoint via le réseau de communication, selon un second mode de réalisation de l'invention.

Dans une étape 601, le second dispositif terminal 112 transmet un message JOIN afin d'abonner le second dispositif terminal 112 à une transmission point-à-multipoint identifiée par l'adresse IP2.

Dans une étape 602, le second dispositif pont 130 reçoit le message JOIN transmis à l'étape 601, identifie via quel port dudit second dispositif pont 130 ledit message JOIN a été reçu et stocke en mémoire une information représentative dudit port et de ladite adresse IP2. Le second dispositif pont 130 propage alors, dans une étape 603, ledit message JOIN sur tous les autres ports dudit second dispositif pont 130, *i.e.* tous les ports dudit second dispositif pont 130 à l'exception du port via lequel ledit message JOIN a été reçu.

Dans une étape 604, le dispositif d'interconnexion 101 reçoit ledit message JOIN propagé par le second dispositif pont 130 à l'étape 603 et identifie via quel port dudit troisième dispositif pont 140 ledit message JOIN a été reçu. Le message JOIN reçu est alors traité par le module consommateur 160 et par le module 170 d'annonce d'abonnement. Le module consommateur 160 détermine si le message JOIN reçu implique un abonnement auprès d'une transmission point-à-multipoint issue du réseau étendu WAN 100. Dans le cadre de transmissions point-à-multipoint localisées sur le réseau de communication formé par les branches connectées aux première 151 et seconde 152 interfaces du dispositif d'interconnexion 101, aucun abonnement auprès d'une transmission point-à-multipoint issue du réseau étendu WAN 100 n'est requis. Le module consommateur 160 efface alors le message JOIN reçu, dans une étape 605. Dans une étape 606, le module 170 d'annonce d'abonnement identifie via quel port dudit troisième dispositif pont 140 ledit message JOIN a été reçu et stocke une information représentative dudit port en association avec l'adresse IP2. Ensuite, le module 170 d'annonce d'abonnement transmet un message JOIN, correspondant au message JOIN reçu, sur tous les ports du troisième dispositif pont 140, c'est-à-dire y compris le port via lequel le message JOIN a été reçu à l'étape 604, mais à l'exception du port auquel est connecté le réseau étendu WAN 100. En d'autres termes, le message JOIN est transmis sur toutes les branches du réseau de communication (le réseau étendu WAN 100 n'étant pas une branche dudit réseau de communication). Ainsi, dans une étape 607, le module 170 d'annonce d'abonnement transmet un message JOIN concernant la transmission point-à-multipoint identifiée par l'adresse IP2 via le port via lequel le précédent message JOIN transmis par le second dispositif terminal 112 a été reçu, c'est-à-dire le port 142. Ce message JOIN, transmis par le module 170 d'annonce d'abonnement, est alors reçu par le second dispositif pont 130 via le port 132 dans une étape 608. Le second dispositif pont 130 identifie alors via quel port dudit second dispositif pont 130 ledit message JOIN a été reçu et stocke en mémoire une information représentative dudit port et de ladite adresse IP2. Le second dispositif pont 130 propage alors le message JOIN, reçu à l'étape 608, via les autres ports du second dispositif pont 130 (étape non représentée sur la Fig. 6). Et, dans une étape 609, le module 170 d'annonce d'abonnement transmet un message JOIN concernant la transmission point-à-multipoint identifiée par l'adresse IP2 via le port 141. Ce message JOIN, transmis par le module 170 d'annonce d'abonnement, est alors reçu par le premier dispositif pont 120 via le port 123 dans une étape 610. Le premier dispositif pont 120 identifie alors via quel port dudit premier dispositif pont 120 ledit message JOIN a été reçu et stocke en mémoire une information représentative dudit port et de ladite adresse IP2. Le premier dispositif pont 120 propage alors le message JOIN, reçu à l'étape 610, via les autres ports du premier dispositif pont 120 (étape non représentée sur la Fig. 6). Le dispositif d'interconnexion 101 déclenche alors une phase d'écoute de messages point-à-multipoint à l'adresse IP2. Cette phase est par exemple délimitée par une temporisation de durée prédéfinie. Dans une variante de réalisation, cette phase prend fin lorsque le dispositif d'interconnexion 101 reçoit un premier message point-à-multipoint à l'adresse IP2.

Lorsque le premier dispositif terminal 111 transmet dans une étape 611 un message point-à-multipoint à l'adresse IP2, ce message est reçu par le premier dispositif pont 120 dans une étape 612. Le premier dispositif pont 120 retrouve l'adresse IP2 associée au port 123. Le message point-à-multipoint étant reçu via le port 122, le premier dispositif pont 120 propage ledit message point-à-multipoint via le port 123 dans une étape 613. Le message point-à-multipoint est alors reçu par le dispositif d'interconnexion 101 dans une étape 614. Le message point-à-multipoint est alors traité par le module 170 d'annonce d'abonnement.

Dans une étape 615, le module 170 d'annonce d'abonnement crée un client virtuel associé au port du troisième dispositif pont 140 via lequel ledit message point-à-multipoint a été reçu. Le client virtuel est associé audit port du troisième dispositif pont 140 via lequel ledit message point-à-multipoint a été reçu et à ladite adresse IP2.

Dans un mode préféré de réalisation, le client virtuel ainsi créé n'est pas associé à une durée de vie limitée. En effet, étant donné qu'aucun message JOIN n'est attendu de la part du premier dispositif terminal 111, la durée de vie du client virtuel est liée à la présence d'au moins un client pour la transmission point-à-multipoint, c'est-à-dire que le client virtuel expire et est supprimé lorsque un message LEAVE est reçu pour le dernier client déclaré pour la transmission point-à-multipoint ou qu'aucun nouveau message JOIN n'est reçu pour ce dernier client pendant une durée prédéfinie.

En variante de réalisation, le client virtuel ainsi créé peut être associé à une durée de vie prédéfinie. Avant expiration de cette durée de vie, le dispositif d'interconnexion 101 vérifie si le dispositif terminal 111 poursuit la transmission de messages point-à-multipoint à l'adresse IP2. Si tel est le cas, le dispositif d'interconnexion 101 renouvelle la durée de vie du client virtuel ; sinon, le client virtuel expire et est supprimé. Cette variante de réalisation peut être plus délicate à mettre en oeuvre dans le cas où le dispositif d'interconnexion 101 comporte des accélérateurs matériels et où le module 170 d'annonce d'abonnement est mis en oeuvre sous forme logicielle.

Puis, dans une étape 616, le dispositif d'interconnexion 101 retrouve l'adresse IP2 associée au port 142. Le message point-à-multipoint étant reçu via le port 141, le troisième dispositif pont 140 propage ledit message point-à-multipoint via le port 142 dans une étape 617. Le message point-à-multipoint est alors reçu par le second dispositif pont 130 dans une étape 618. Le second dispositif pont 130 retrouve l'adresse IP2 associée au port 132 et au port 133. Le message point-à-multipoint étant reçu via le port 132, le second dispositif pont 130 propage ledit message point-à-multipoint via le port 133 dans une étape 619. Le message point-à-multipoint est alors reçu et consommé par le second dispositif terminal 112 dans une étape 620.

La mise en oeuvre du module 170 d'annonce d'abonnement dont le comportement a été décrit ci-dessus permet ainsi aux transmissions point-à-multipoint, dans le réseau de communication, d'aboutir, même lorsque le dispositif ayant le rôle de serveur dans les transmissions point-à-multipoint ne transmet pas de message JOIN (ce qui par exemple le cas dans la mise en oeuvre d'un serveur VLC (acronyme originel de « VideoLAN Client » en anglais, hérité de la technologie VLS, acronyme du projet « VideoLAN Server » en anglais).

Dans un mode de réalisation particulier, tant que le dispositif d'interconnexion 101 est en phase d'écoute de messages point-à-multipoint à l'adresse IP2, le module 170 d'annonce d'abonnement est préférentiellement adapté pour transmettre périodiquement des messages JOIN via tous les ports du troisième dispositif pont 140, mais à l'exception du port auquel est connecté le réseau étendu WAN 100. Cela permet aux premier 120 et second 130 dispositifs pont de maintenir actives les ressources réservées pour la transmission point-à-multipoint à l'adresse IP2. Ensuite, lorsque la phase d'écoute de messages point-à-multipoint à l'adresse IP2 prend fin, le module 170 d'annonce d'abonnement transmet périodiquement de tels messages JOIN uniquement pour les ports via lesquels des messages JOIN concernant l'adresse IP2 ont été reçus, comme à l'étape 604, ainsi que pour les ports pour lesquels des clients virtuels ont été créés, comme à l'étape 615. Le trafic de données dans le réseau de communication est ainsi réduit.

Sur la Fig. 6, cette phase d'envoi périodique est symbolisée par le groupe d'étapes 623. Dans une étape 624, le module 170 d'annonce d'abonnement détecte qu'une temporisation de durée prédéfinie est écoulée depuis l'envoi du ou des précédents messages JOIN par ledit module 170 d'annonce d'abonnement. Le module 170 d'annonce d'abonnement récupère l'information représentative de chaque port du troisième dispositif pont 140 via lequel un message JOIN a été précédemment reçu et stocké (lors de l'étape 606 par exemple). Dans le contexte de la Fig. 6, le module 170 d'annonce d'abonnement récupère un identifiant du port 142, tel que stocké lors de l'étape 606. Ensuite, le module 170 d'annonce d'abonnement génère et transmet un message JOIN, correspondant à l'adresse IP2, via chaque port ainsi identifié. Ainsi, dans une étape 625, le module 170 d'annonce d'abonnement transmet ce message JOIN via le port 142. Ce message JOIN est reçu par le second dispositif pont 130 dans une étape 626. Le second dispositif pont 130 augmente la durée de vie de la transmission point-multipoint associée à l'adresse IP2 pour ce qui concerne le port via lequel le message JOIN est reçu, *i.e.* le port 132, et propage le message JOIN via les autres ports, *i.e.* tous les ports dudit second dispositif pont 130 à l'exception du port via lequel ledit message JOIN a été reçu (étape non représentée sur la Fig. 6). De plus, le module 170 d'annonce d'abonnement récupère l'information représentative de chaque port du troisième dispositif pont 140 pour lequel un client virtuel a été créé en association avec l'adresse IP2 (lors de l'étape 615 par exemple). Dans le contexte de la Fig. 6, le module 170 d'annonce d'abonnement récupère un identifiant du port 141, tel que stocké lors de l'étape 615. Ainsi, dans une étape 627, le module 170 d'annonce d'abonnement transmet le message JOIN via le port 141. Ce message JOIN est reçu par le premier dispositif pont 120 dans une étape 628. Le premier dispositif pont 120 augmente la durée de vie de la transmission point-multipoint associée à l'adresse IP1 pour ce qui concerne le port via lequel le message JOIN est reçu, *i.e.* le port 123, et propage le message JOIN via les autres ports, *i.e*. tous les ports dudit premier dispositif pont 120 à l'exception du port via lequel ledit message JOIN a été reçu (étape non représentée sur la Fig. 6). Ensuite, le module 170 d'annonce d'abonnement réinitialise la temporisation, pour une réactivation ultérieure de la phase d'envoi périodique 623.

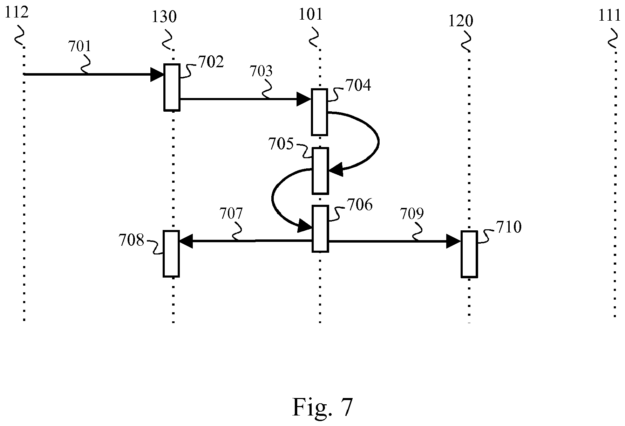

La Fig. 7 illustre schématiquement des échanges de messages dans le cadre d'un désabonnement à des transmissions point-à-multipoint via le réseau de communication, selon le second mode de réalisation de l'invention.

Dans une étape 701, le second dispositif terminal 112 transmet un message LEAVE afin de désabonner le second dispositif terminal 112 de la transmission point-à-multipoint identifiée par l'adresse IP2.

Dans une étape 702, le second dispositif pont 130 reçoit le message LEAVE transmis à l'étape 701, identifie via quel port dudit second dispositif pont 130 ledit message LEAVE a été reçu et recherche en mémoire la présence d'une information représentative dudit port et de ladite adresse IP2. Lorsque le second dispositif pont 130 retrouve cette information, ledit second dispositif pont 130 efface cette information de sa mémoire et propage, dans une étape 703, ledit message LEAVE sur tous les autres ports dudit second dispositif pont 130, *i.e.* tous les ports dudit second dispositif pont 130 à l'exception du port via lequel ledit message LEAVE a été reçu.

Dans une étape 704, le dispositif d'interconnexion 101 reçoit ledit message LEAVE propagé par le second dispositif pont 130 à l'étape 703 et identifie via quel port dudit troisième dispositif pont 140 ledit message LEAVE a été reçu. Le message LEAVE reçu est alors traité par le module consommateur 160 et par le module 170 d'annonce d'abonnement. Le module consommateur 160 détermine si le message LEAVE reçu implique un désabonnement auprès d'une transmission point-à-multipoint issue du réseau étendu WAN 100. Dans le cadre de transmissions point-à-multipoint localisées sur le réseau de communication formé par les branches connectées aux première 151 et seconde 152 interfaces du dispositif d'interconnexion 101, aucun désabonnement auprès d'une transmission point-à-multipoint issue du réseau étendu WAN 100 n'est requis. Le module consommateur 160 efface alors le message LEAVE reçu, dans une étape 705. Dans une étape 706, le module 170 d'annonce d'abonnement identifie via quel port dudit troisième dispositif pont 140 ledit message LEAVE a été reçu et recherche en mémoire la présence d'une information représentative dudit port en association avec l'adresse IP2. Lorsque le module 170 d'annonce d'abonnement retrouve cette information, ledit module 170 d'annonce d'abonnement efface cette information de sa mémoire. Ensuite, dans une étape 707, le module 170 d'annonce d'abonnement transmet un message LEAVE concernant la transmission point-à-multipoint identifiée par l'adresse IP2 via le port via lequel le précédent message LEAVE transmis par le second dispositif terminal 112 a été reçu, c'est-à-dire le port 142. Ce message LEAVE, transmis par le module 170 d'annonce d'abonnement, est alors reçu par le second dispositif pont 130 via le port 132 dans une étape 708. Le second dispositif pont 130 identifie alors via quel port dudit second dispositif pont 130 ledit message LEAVE a été reçu et recherche en mémoire la présence d'une information représentative dudit port et de ladite adresse IP2. Lorsque le second dispositif pont 130 retrouve cette information, ledit second dispositif pont 130 efface cette information de sa mémoire et propage le message LEAVE, reçu à l'étape 708, via les autres ports du second dispositif pont 130 (étape non représentée sur la Fig. 7).

Dans l'étape 706, le module 170 d'annonce d'abonnement recherche aussi si au moins un client virtuel a été créé, comme à l'étape 615, en association avec l'adresse IP2. Lorsqu'un tel client virtuel est détecté, le module 170 d'annonce d'abonnement identifie quel port dudit troisième dispositif pont 140 est associé au client virtuel détecté. Le module 170 d'annonce d'abonnement efface alors le client virtuel de sa mémoire. Ensuite, dans une étape 709, le module 170 d'annonce d'abonnement transmet un message LEAVE concernant la transmission point-à-multipoint identifiée par l'adresse IP2 via le port associé au client virtuel détecté, c'est-à-dire le port 141. Ce message LEAVE, transmis par le module 170 d'annonce d'abonnement, est alors reçu par le premier dispositif pont 120 via le port 123 dans une étape 710. Le premier dispositif pont 120 identifie alors via quel port dudit premier dispositif pont 120 ledit message LEAVE a été reçu et recherche en mémoire la présence d'une information représentative dudit port et de ladite adresse IP2. Lorsque le premier dispositif pont 120 retrouve cette information, ledit premier dispositif pont 120 efface cette information de sa mémoire et propage le message LEAVE, reçu à l'étape 710, via les autres ports du premier dispositif pont 120 (étape non représentée sur la Fig. 7).

Par souci de simplicité de description, la description précédente des Figs. 4 à 7 a été détaillée dans le cas où seuls les dispositifs terminaux 111 et 112 sont des terminaisons, sur le réseau de communication, des transmissions point-à-multipoint concernées par les abonnements et désabonnements. Bien entendu, plus de dispositifs terminaux peuvent être des terminaisons, sur le réseau de communication, des transmissions point-à-multipoint concernées par les abonnements et désabonnements. Le dispositif d'interconnexion 101 peut alors recevoir, en provenance de dispositifs terminaux distincts, des messages JOIN (ou LEAVE) respectifs en vue d'abonner (resp. désabonner) lesdits dispositifs terminaux aux transmissions point-à-multipoint. Le dispositif garde alors trace, en association avec le port via lequel un message JOIN est reçu et l'adresse IP point-à-multipoint concernée, de l'adresse IP du dispositif ayant généré le message JOIN. Le module 170 d'annonce d'abonnement effectue alors un envoi périodique ou pseudopériodique d'un message JOIN jusqu'à ce qu'aucun client de la transmission point-à-multipoint ne subsiste sur la branche du réseau de communication via laquelle le message JOIN est à transmettre. Selon le même principe, dans le cadre du second mode de réalisation décrit en relation avec les Figs. 6 et 7, un client virtuel est effacé par le module 170 d'annonce d'abonnement lorsqu'un message LEAVE pour le dernier client encore déclaré sur la transmission point-à-multipoint concernée est reçu par le dispositif d'interconnexion 101, ou qu'une temporisation de durée prédéfinie soit écoulée sans qu'une nouvelle requête JOIN ne soit reçue. Le principe est que le client virtuel est supprimé lorsque le dispositif d'interconnexion 101 considère que le dernier client de la transmission point-à-multipoint considérée est déconnecté.

Lorsque plusieurs dispositifs terminaux sont concernés par un envoi périodique de messages JOIN sur une branche du réseau de communication, le module 170 d'annonce d'abonnement peut envoyer un message JOIN pour chacun de ces dispositifs terminaux. Le module 170 d'annonce d'abonnement utilise alors comme adresses IP sources les adresses IP des dispositifs terminaux abonnés à ladite transmission point-à-multipoint et présents sur ladite branche du réseau de communication. Dans une variante de réalisation, lorsque plusieurs dispositifs terminaux sont concernés par un envoi périodique de messages JOIN sur une branche du réseau de communication, le module 170 d'annonce d'abonnement peut envoyer, à chaque itération, un unique message JOIN pour l'ensemble de ces dispositifs terminaux. Le module 170 d'annonce d'abonnement utilise alors comme adresse IP source l'adresse IP du dispositif d'interconnexion 101.

## Revendications

1. Procédé de gestion de requêtes d'abonnement à des transmissions point-à-multipoint dans un réseau de communication dont au moins deux branches sont interconnectées par un dispositif d'interconnexion (101) comportant un module consommateur (160) de telles requêtes d'abonnement empêchant la propagation desdites requêtes d'une branche à une autre branche du réseau de communication, au moins une desdites branches comportant au moins un dispositif pont (120 ; 130), **caractérisé en ce que**, le dispositif d'interconnexion comportant un module d'annonce d'abonnement (170), ledit module d'annonce d'abonnement effectue l'étape suivante :
- sur réception (404 ; 412 ; 604) via une branche d'une première requête d'abonnement à une transmission point-à-multipoint, transmission (407 ; 415 ; 607) d'une seconde requête d'abonnement à ladite transmission point-à-multipoint au moins via la branche via laquelle ladite première requête d'abonnement a été reçue.

2. Procédé selon la revendication 1, **caractérisé en ce que** ledit module d'annonce d'abonnement effectue l'étape suivante :
- sur réception (504 ; 512 ; 704) via une branche d'une première requête de désabonnement à une transmission point-à-multipoint, transmission (507 ; 515 ; 707) d'une seconde requête de désabonnement à ladite transmission point-à-multipoint au moins via ladite branche via laquelle ladite première requête de désabonnement a été reçue.

3. Procédé selon l'une quelconque des revendications 1 et 2, **caractérisé en ce que** ledit module d'annonce d'abonnement effectue les étapes suivantes :
- sur réception (604) via une branche de ladite première requête d'abonnement, transmission (607, 609) de ladite seconde requête d'abonnement via chacune desdites branches ;
- sur réception (614) d'un message point-à-multipoint dans le cadre de ladite transmission point-à-multipoint, création (616) d'un client virtuel en association avec la branche via laquelle ledit message point-à-multipoint a été reçu.

4. Procédé selon la revendication 3, **caractérisé en ce que** ledit module d'annonce d'abonnement transmet périodiquement ou pseudo-périodiquement (623, 625, 627) la seconde requête d'abonnement uniquement via ladite branche via laquelle ladite première requête a été reçue et via ladite branche pour laquelle le client virtuel a été créé.

5. Procédé selon la revendication 4, **caractérisé en ce que** ledit module d'annonce d'abonnement supprime (706) ledit client virtuel lorsque le dispositif d'interconnexion considère que le dernier client de ladite transmission point-à-multipoint est déconnecté.

6. Procédé selon l'une quelconque des revendications 1 et 2, **caractérisé en ce que**, lorsque chaque serveur de la transmission point-à-multipoint est supposé envoyer une requête d'abonnement à ladite transmission point-à-multipoint, ledit module d'annonce d'abonnement transmet (407 ; 415) ladite seconde requête d'abonnement uniquement via ladite branche via laquelle ladite première requête a été reçue.

7. Procédé selon la revendication 6, **caractérisé en ce que** ledit module d'annonce d'abonnement transmet périodiquement ou pseudo-périodiquement (433 ; 435 ; 437) la seconde requête d'abonnement uniquement via ladite branche via laquelle ladite première requête a été reçue.

8. Procédé selon l'une quelconque des revendications 1 à 7, **caractérisé en ce que**, le dispositif d'interconnexion comportant un dispositif pont interne (140), chaque branche est identifiée par le port dudit dispositif pont interne via lequel ladite branche est connectée.

9. Procédé selon l'une quelconque des revendications 1 à 8, **caractérisé en ce que** le dispositif d'interconnexion est une passerelle résidentielle.

10. Dispositif d'interconnexion (101) adapté pour gérer des requêtes d'abonnement à des transmissions point-à-multipoint dans un réseau de communication dont au moins deux branches sont interconnectées par le dispositif d'interconnexion, le dispositif d'interconnexion comportant un module consommateur (160) de telles requêtes d'abonnement empêchant la propagation desdites requêtes d'une branche à une autre branche du réseau de communication, au moins une desdites branches étant destinée à comporter au moins un dispositif pont (120 ; 130), **caractérisé en ce que** le dispositif d'interconnexion comporte un module d'annonce d'abonnement (170) et met en oeuvre, sur réception (404 ; 412 ; 604) via une branche d'une première requête d'abonnement à une transmission point-à-multipoint, des moyens de transmission (407 ; 415 ; 607) d'une seconde requête d'abonnement à ladite transmission point-à-multipoint au moins via la branche via laquelle ladite première requête d'abonnement a été reçue.

11. Produit programme d'ordinateur, **caractérisé en ce qu'**il comporte des instructions entraînant l'exécution du procédé selon l'une quelconque des revendications 1 à 9, lorsque lesdites instructions sont exécutées par un processeur.

12. Moyens de stockage d'informations, **caractérisé en ce qu'**il stocke un programme d'ordinateur comportant des instructions entraînant l'exécution du procédé selon l'une quelconque des revendications 1 à 9, lorsque lesdites instructions sont exécutées par un processeur.

## Patentansprüche

1. Verfahren zur Verwaltung von Anmeldungsanträgen zu Punkt-zu-Mehrpunkt-Übertragungen in einem Kommunikationsnetz, von dem mindestens zwei Zweige durch eine Zusammenschaltungsvorrichtung (101) miteinander verbunden sind, die ein Verbrauchermodul (160) solcher Anmeldungsanträge aufweist, das die Ausbreitung der Anträge von einem Zweig zu einem anderen Zweig des Kommunikationsnetzes verhindert, wobei mindestens einer der Zweige mindestens eine Brückenvorrichtung (120; 130) aufweist, **dadurch gekennzeichnet, dass**, da die Zusammenschaltungsvorrichtung ein Anmeldungsankündigungsmodul (170) aufweist, das Anmeldungsankündigungsmodul den folgenden Schritt ausführt:
- bei Empfang (404; 412; 604) eines ersten Anmeldungsantrags zu einer Punkt-zu-Mehrpunkt-Übertragung über einen Zweig, Übertragung (407; 415; 607) eines zweiten Anmeldungsantrags zur Punkt-zu-Mehrpunkt-Übertragung mindestens über den Zweig, über den der erste Anmeldungsantrag empfangen wurde.

2. Verfahren nach Anspruch 1, **dadurch gekennzeichnet, dass** das Anmeldungsankündigungsmodul den folgenden Schritt ausführt:
- bei Empfang (504; 512; 704) eines ersten Abmeldungsantrags zu einer Punkt-zu-Mehrpunkt-Übertragung über einen Zweig, Übertragung (507; 515; 707) eines zweiten Abmeldungsantrags zur Punkt-zu-Mehrpunkt-Übertragung mindestens über den Zweig, über den der erste Abmeldungsantrag empfangen wurde.

3. Verfahren nach einem der Ansprüche 1 und 2, **dadurch gekennzeichnet, dass** das Anmeldungsankündigungsmodul die folgenden Schritte ausführt:
- bei Empfang (604) des ersten Anmeldungsantrags über einen Zweig, Übertragung (607, 609) des zweiten Anmeldungsantrags über jeden der Zweige;
- bei Empfang (614) einer Punkt-zu-Mehrpunkt-Nachricht im Rahmen der Punkt-zu-Mehrpunkt-Übertragung, Erzeugung (616) eines virtuellen Clients in Verbindung mit dem Zweig, über den die Punkt-zu-Mehrpunkt-Nachricht empfangen wurde.

4. Verfahren nach Anspruch 3, **dadurch gekennzeichnet, dass** das Anmeldungsankündigungsmodul periodisch oder pseudo-periodisch (623, 625, 627) den zweiten Anmeldungsantrag nur über den Zweig, über den der erste Antrag empfangen wurde, und über den Zweig, für den der virtuelle Client erzeugt wurde, überträgt.

5. Verfahren nach Anspruch 4, **dadurch gekennzeichnet, dass** das Anmeldungsankündigungsmodul den virtuellen Client löscht (706), wenn die Zusammenschaltungsvorrichtung annimmt, dass der letzte Client der Punkt-zu-Mehrpunkt-Übertragung abgeschaltet wurde.

6. Verfahren nach einem der Ansprüche 1 und 2, **dadurch gekennzeichnet, dass**, wenn jeder Server der Punkt-zu-Mehrpunkt-Übertragung einen Anmeldungsantrag zur Punkt-zu-Mehrpunkt-Übertragung schicken soll, das Anmeldungsankündigungsmodul den zweiten Anmeldungsantrag nur über den Zweig überträgt (407; 415), über den der erste Antrag empfangen wurde.

7. Verfahren nach Anspruch 6, **dadurch gekennzeichnet, dass** das Anmeldungsankündigungsmodul periodisch oder pseudo-periodisch (433; 435; 437) den zweiten Anmeldungsantrag nur über den Zweig überträgt, über den der erste Antrag empfangen wurde.

8. Verfahren nach einem der Ansprüche 1 bis 7, **dadurch gekennzeichnet, dass**, da die Zusammenschaltungsvorrichtung eine innere Brückenvorrichtung (140) aufweist, jeder Zweig durch den Port der inneren Brückenvorrichtung identifiziert wird, über den der Zweig verbunden ist.

9. Verfahren nach einem der Ansprüche 1 bis 8, **dadurch gekennzeichnet, dass** die Zusammenschaltungsvorrichtung ein Residential-Gateway ist.

10. Zusammenschaltungsvorrichtung (101), die geeignet ist, Anmeldungsanträge zu Punkt-zu-Mehrpunkt-Übertragungen in einem Kommunikationsnetz zu verwalten, von dem mindestens zwei Zweige durch die Zusammenschaltungsvorrichtung zusammengeschaltet werden, wobei die Zusammenschaltungsvorrichtung ein Verbrauchermodul (160) solcher Anmeldungsanträge aufweist, das die Ausbreitung der Anträge von einem Zweig zu einem anderen Zweig des Kommunikationsnetzes verhindert, wobei mindestens einer der Zweige dazu bestimmt ist, mindestens eine Brückenvorrichtung (120; 130) aufzuweisen, **dadurch gekennzeichnet, dass** die Zusammenschaltungsvorrichtung ein Anmeldungsankündigungsmodul (170) aufweist und bei Empfang (404; 412; 604) eines ersten Anmeldungsantrags zu einer Punkt-zu-Mehrpunkt-Übertragung über einen Zweig Übertragungseinrichtungen (407; 415; 607) eines zweiten Anmeldungsantrags zur Punkt-zu-Mehrpunkt-Übertragung mindestens über den Zweig verwendet, über den der erste Anmeldungsantrag empfangen wurde.

11. Computerprogrammprodukt, **dadurch gekennzeichnet, dass** es Anweisungen aufweist, die die Ausführung des Verfahrens nach einem der Ansprüche 1 bis 9 nach sich ziehen, wenn die Anweisungen von einem Prozessor ausgeführt werden.

12. Datenspeichereinrichtung, **dadurch gekennzeichnet, dass** sie ein Computerprogramm speichert, das Anweisungen aufweist, die die Ausführung des Verfahrens nach einem der Ansprüche 1 bis 9 nach sich ziehen, wenn die Anweisungen von einem Prozessor ausgeführt werden.

## Claims

1. Method for managing requests for subscription to multicast transmissions in a communication network, at least two branches thereof being interconnected by an interconnection device (101) comprising a module (160) consuming such subscription requests preventing the propagation of said requests from one branch to another branch of the communication network, at least one of said branches comprising at least one bridge device (120; 130), **characterised in that**, the interconnection device comprising a subscription announcement module (170), said subscription announcement module performs the following step:
- upon reception (404; 412; 604) via a branch of a first request for subscription to a multicast transmission, transmitting (407; 415; 607) a second request for subscription to said multicast transmission at least via the branch via which said first subscription request was received.

2. Method according to claim 1, **characterised in that** said subscription announcement module performs the following step:
- upon reception (504; 512; 704) via a branch of a first request for unsubscription from a multicast transmission, transmitting (507; 515; 707) a second request for unsubscription from said multicast transmission at least via said branch via which said first unsubscription request was received.

3. Method according to any one of claims 1 and 2, **characterised in that** said subscription announcement module performs the following steps:
- upon reception (604) via a branch of said first subscription request, transmitting (607, 609) said second subscription request via each of said branches;
- upon reception (614) of a multicast message in the context of said multicast transmission, creation (616) of a virtual client in association with the branch via which said multicast message was received.

4. Method according to claim 3, **characterised in that** said subscription announcement module transmits periodically or pseudo-periodically (623, 625, 627) the second subscription request only via said branch via which said first request was received and via said branch for which the virtual client was created.

5. Method according to claim 4, **characterised in that** said subscription announcement module deletes (706) said virtual client when the interconnection device considers that the last client of said multicast transmission is disconnected.

6. Method according to any one of claims 1 and 2, **characterised in that**, when each server of the multicast transmission is supposed to send a request for subscription to said multicast transmission, said subscription announcement module transmits (407; 415) said second subscription request only via said branch via which said first request was received.

7. Method according to claim 6, **characterised in that** said subscription announcement module transmits periodically or pseudo-periodically (433; 435; 437) the second subscription request solely via said branch via which said first request was received.

8. Method according to any one of claims 1 to 7, **characterised in that**, the interconnection device comprising an internal bridge device (140), each branch is identified by the port of said internal bridge device via which said branch is connected.

9. Method according to any one of claims 1 to 8, **characterised in that** the interconnection device is a residential gateway.

10. Interconnection device (101) adapted for managing requests for subscription to multicast transmissions in a communication network, at least two branches thereof being interconnected via the interconnection device, the interconnection device comprising a module (160) consuming such subscription requests preventing the propagation of said requests from one branch to another branch of the communication network, at least one of said branches being intended to comprise at least one bridge device (120; 130), **characterised in that** the interconnection device comprises a subscription announcement module (170) and, upon reception (404; 412; 604) via a branch of a first request for subscription to a multicast transmission, implements means (407; 415; 607) for transmitting a second request for subscription to said multicast transmission at least via the branch via which said first subscription request was received.

11. Computer program product, **characterized in that** it comprises instructions causing execution of the method according to any one of claims 1 to 9, when said instructions are executed by a processor.

12. Information storage means, **characterized in that** it stores a computer program comprising instructions causing execution of the method according to any one of claims 1 to 9, when said instructions are executed by a processor.
